**Europäisches Patentamt**

**European Patent Office**

**Office européen des brevets**

(11) Publication number: **0 137 527**
**B1**

## EUROPEAN PATENT SPECIFICATION

(45) Date of publication of patent specification: **31.05.89**

(51) Int. Cl.⁴: **C 08 K 9/04, C 08 J 3/22**

(21) Application number: **84201051.4**

(22) Date of filing: **13.07.84**

(54) **Process for the production of lubricating, stabilising additive mixtures in the form of powder-free flakes.**

(30) Priority: **20.07.83 IT 4685383**

(43) Date of publication of application:
**17.04.85 Bulletin 85/16**

(45) Publication of the grant of the patent:
**31.05.89 Bulletin 89/22**

(84) Designated Contracting States:
**AT BE CH DE FR GB IT LI LU NL SE**

(56) References cited:
**DE-A-3 224 717**
**NL-A-7 900 252**

**CHEMICAL ABSTRACTS, vol. 96, no. 26, 28th
June 1982, page 49, no. 218799w, Columbus,
Ohio, US; & JP - A - 82 28146 (MIZUSAWA
INDUSTRIAL CHEMICALS, LTD.) 15-02-1982**

(73) Proprietor: **REAGENS S.P.A. Industria Chimica
4, Via Codronchi
I-40016 S. Giorgio di Piano (Bologna) (IT)**

(72) Inventor: **Ambu, Ignazio, Dr.
13, Via Demetrio Martinelli
I-40100 Bologna (IT)**
Inventor: **Nanni, Augusto
7, Via Bellinzona
I-40100 Bologna (IT)**
Inventor: **Scalorbi, Enea, Dr.
84, Via del Colle
I-40068 S.Lazzaro di Savena (Bologna) (IT)**

(74) Representative: **Corradini, Corrado
STUDIO SECCHI & CORRANDINI
4, Via Dante Alighieri
I-42100 Reggio Emilia (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

Halogenated vinyl polymers in general and polyvinyl chloride—PVC—in particular are known to be widely used for the production of end products, for example in the form of sheets, panels, window frames roll shutters and others, which are usually exposed to atmospheric agents and light during their use.

It is also known that in order to prevent degradation of the polymer, mixtures are added to it which comprise stabilising products, antioxidant products, products for filtering the ultraviolet rays, lubricant products, and also pigments if necessary.

Because these additives are highly toxic, and because they are often in the form of fine powders which are difficult to handle, the corresponding stabilising mixtures have to be reduced to granules or flakes which together with the absence of powder possess good flowability and dispersibility in the resin for which they are intended.

In general, in order to give the stabilising mixtures one of the aforesaid forms, processes are used which operate on a molten mass having good fluidity, and of which the formulation comprises both the meltable products and the non-meltable products to be processed.

Consequently, in order to obtain the required fluidity the ratio of the quantity of meltable products to the quantity of non-meltable products must be at least 1:4 for products which are of low viscosity in the molten state, and up to at least 1:2 for products which are viscous in the molten state, otherwise if the values are lower the molten mass cannot be worked by known systems.

In a first known system, for example that described in Italian patents 762,268 and 788,040, stabilisers which are not meltable below the PVC softening point, for example tribasic Pb sulphate, are dispersed in a molten mass of meltable components, for example neutral Pb stearate, with the possible addition of other low-melting products for making the molten mass fluid.

This latter is thus transformed in a cold environment, for example by means of spraying, to obtain granules, flakes or another convenient form.

The molten stabilising mixture mass obtained by this process must be fluid and flowable when hot, and thus said system is suitable only for these formulations in which the ratio of meltable products to non-meltable products is greater than 1:4, as stated.

In another known process, described in Italian patent 803,002, pulverulent stabilising mixtures are mixed with low melting point organic products, such as waxes and esters, by means of rapid mixers.

The result is a product in the form of granules of various sizes, of diameter between 0.1 and 10 mm, which have the tendency to agglomerate and are not free from powder.

Again, in order to transform the additives into granules, Italian patent 867,139 suggests the use of extruder devices in which the stabilising mixture is compressed under cold conditions in order to force it through a convenient die, for example a perforated plate or drum.

It has however been found that the granules obtained by this latter known system have their interior friable, whereas their outer surface is excessively compact, with the result that they are often poorly dispersable, particularly in plasticised PVC.

Moreover, said granules have relatively low flowability, and are therefore difficult to ensile and to meter automatically.

Again, Italian patent 916,928 in the name of the present applicant teaches how to obtain a stabilising mixture granulate possessing good flowability and thus suitable for automatic ensiling without the aid of complex and costly plant, but for certain formulations the presence of finely divided toxic powders is not completely eliminated, and these create some problems especially in those plants without automatic weighing systems.

A further known system is that described in Italian patent application 49,948 A/78 which relates to a process for obtaining small flakes of stabilising mixtures by keeping a fluid molten mass agitated with the aid of electrical resistance heaters, and then cooling the product on a belt.

This process is also suitable only for certain formulations, and cannot be used in these cases in which the percentage of meltable products is low compared with that of the non-meltable products.

A drawback common to all known processes of this type is that if the meltable products used are not soluble in each other, it is difficult to keep them mixed in the form of a homogeneous molten mass, and there is thus a strong tendency to generate undesirable stratification.

A further limitation of said known processes is the need to use large quantities of meltable components in the additive formulation, in order to always obtain at one stage of the process a mass which is fluid and flowable under hot conditions.

The present patent provides and protects a process and plant by means of which it is possible to obtain flakes of additive mixtures of any formulation, in the presence of very small quantities of meltable components, the flakes being practically free from powder and possessing good flowability and dispersibility characteristics.

In other words, the ratio of meltable products to non-meltable products is no longer important, because according to the invention the component mixtures do not have to be transferred into a mass which under normal conditions is naturally fluid and flowable when hot.

In this respect, it has been surprisingly, found that if a pulverulant mass containing at least one meltable component in a very small quantity is mixed and compressed simultaneously at a temperature higher than the softening point of said meltable component, it becomes sintered and can be extruded to give a dense or pasty mass which can be easily transformed without generating powder.

The process according to the present invention therefore comprises the production of flakes from a mixture of lubricating, stabilising additives for PVC which contains a product having a melting point between 50° and 90°C, characterised by comprising the following operations:

continuously mixing a pulverulant mixture of additives for PVC containing at least 3% by weight of a product having a melting point between 50° and 90°C, chosen from synthetic and natural waxes of the stearyl stearate type, glyceryl monostearate, montan wax, paraffin, high-melting point synthetic paraffin, and stearyl phthalate, while simultaneously subject it to increasing pressure and temperature of 50°C to 90°C;

extruding the ductile mix thus obtained into at least one continuous filament of constant size;

cold-rolling said at least one filament to obtain a uniformly compacted continuous strip;

crushing said strip into flakes; and

blowing the flakes in counter-current before being stored, in order to separate therefrom any powder generated by the crushing.

The powder mixture is treated in an extruder with screws of variable pitch and having sections temperature-controlled at temperatures which increase from upstream to downstream.

The final product is collected absolutely free from powder by conveying it in a stream of air through successive cyclous separators, the small quantity of powder recovered being recycled.

By this means, according to the process of the invention, flakes of stabilising mixtures are obtained having a size of the order of a few millimeters, which are free from powder, very flowable, and thus easy to store, for example through a pneumatic conveying line.

Said flakes have good dispersability in halogenated vinyl polymers in general.

As heretofore stated, the stabilising mixtures can comprise a wide range of formulation, and according to the invention comprise the products of the classes listed hereinafter, obviously mixed to form compositions which depend on their application and on the characteristics required for the corresponding polymer in which they are to be added.

A. Non-meltable products such as basic Pb salts, for example the sulphuric, sulphurous, phosphorous, phthalic, maleic and carbonic acid derivatives.

B. Partly meltable products such as neutral or basic metal soaps deriving from organic acids with 8—24 C atoms, for example Ba or Cd laurates, Ca, Zn, Pb or Mg stearate, dibasic and monobasic Pb stearate, Li and Ca hydroxystearate.

C. Synthetic and natural waxes of the stearyl stearate type, glyceryl monostearate, montan wax, paraffin, high-melting point synthetic paraffin, stearyl phthalate as meltable lubricant products.

D. Stabilising products in the form of organometal derivatives of tin and antimony.

E. Antioxidants, phenolic derivatives such as bisphenol A; ditertiary butylparacresol; nonylphenol and barium and calcium nonylphenates; organic phosphites such as diphenylisodecylphosphite, stearylpentaerythritolphosphite; organic inhibitors such as pentaerythritol and trimethylolpropane.

F. Other products normally used in PVC transformation such as plasticisers, fillers, UV filters and pigments.

As stated heretofore, the process is applicable to any stabilising mixture formulation or composition, the only condition being that it comprises at least a small quantity of one of the low-melting products stated under point C of the aforesaid list, in order to obtain said ductile mix.

According to the invention, the quantity of low-melting product (C) is at least 3% of the total weight of the stabilising mixture.

Correspondingly, the sections of the screw extruder temperature-controlled at different temperatures, in which the stabilising mixtures are compressed and mixed, have temperatures which increase from 50°C, to 90°C in proximity to the outlet.

A plant suitable for implementing the process of the invention is described hereinafter.

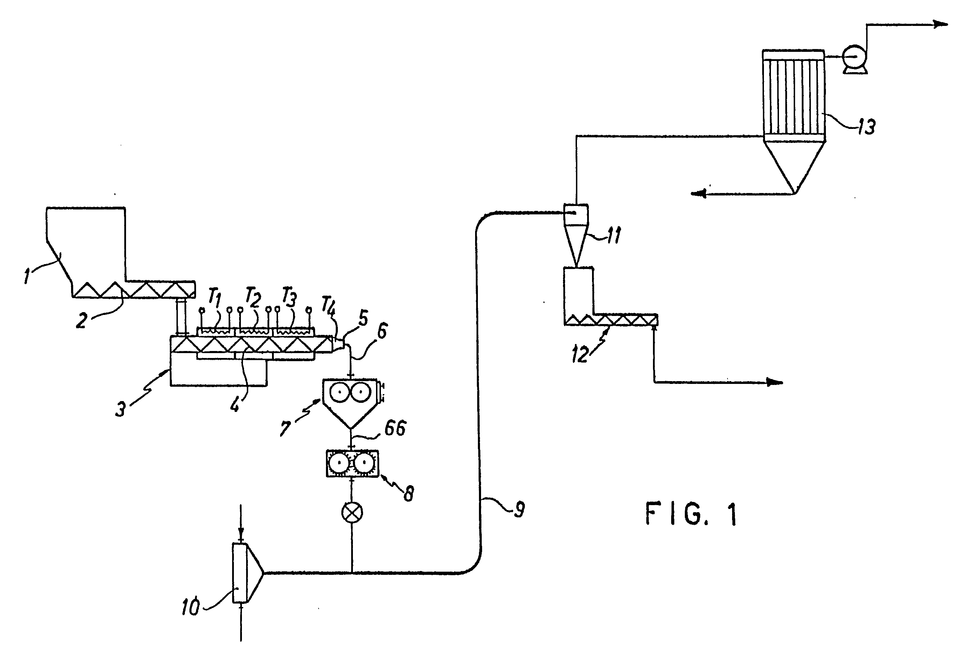

Figure 1 is a diagrammatic representation of the plant.

It comprises a hopper 1 for receiving the stabilising mixture in pulverulent form, and which can be prepared either at the place of manufacture of the components or immediately upstream of the plant.

The hopper 1 comprises a lower discharge screw 2 which feeds the powdered mixture into the chamber of an extruder 3 provided with two side-by-side screws of variable pitch 4, one being right handed and the other left handed, and with a transformation head or die 5 comprising a series of uniformly distributed holes.

The various longitudinal portions of the extruder 3 and die 5 are surrounded by respective jackets which contain electrical resistance heaters, indicated by $T_1$, $T_2$, $T_3$ and $T_4$, of which the operating temperature, which can be adjusted according to the stabilising mixture being processed, increase from upstream to downstream.

These temperatures lie between 50°C and 90°C, and the speeds of the discharge screw 2 and extrusion screws 4 are also varied according to the mixture being processed.

The combined action of the compression, the mixing induced by the screws 4 and the heating means that at the outlet of the extruder 3 the mixture is in the form of a mix which is sufficiently plastic and ductile for subsequent extrusion and rolling.

This mix leaves in the form of continuous filaments 6 from the die 5, said filaments 6 then being inserted into an underlying roller mill 7 in which the rollers are cooled and the gap between them can be adjusted.

At the outlet of the roller mill 7, rigid sheets 66 are obtained having a thickness of between 0.1 and 2 mm, according to the composition of the mixture, and are then reduced to flakes by means of a toothed-roller crushing device 8.

The flakes have a surface area of up to 15 mm² and are fed, together with the small powder residues originating from the crushing, to a pneumatic conveying line 9 which is served by a blower 10.

The line 9 discharges into a powder-separating cyclone 11, in which the flakes fall freely into an underlying collection silo 12 for the finished product.

The air stream which passes through the cyclone 11 in counter-current with the falling path of the flakes separates the fine powder from the flakes and feeds it to a collection vessel 13 under vacuum, and from which the powder ccan be withdrawn for recycling.

The finished product is therefore free from powder, has good flowability and possesses good dispersibility in halogenated vinyl polymers in general, as will be apparent from the examples given hereinafter.

The same plant was used for all the examples, and consisted of a BANDERA® double-screw extruder Type MBB100 with a three-phase 380 V motor, disposed upstream of a BATTACTION® roller mill type MCC 150×300, with a roller diameter of 150 mm and an average roller temperature of 15°C.

The crusher was of the usual type.

The characteristic data of each example are given hereinafter.

Example 1

The extruder is fed with the following powder mixture (percentages by weight)

| | |
|---|---|
| Tribasic Pb sulphate | 25% |
| Dibasic Pb stearate | 50% |
| Paraffin of M.P. 70°C | 10% |
| Stearin | 15% |

The extruder is driven at 6 r.p.m. with an absorbed current of 10 A.

The temperatures in the various sections are $T_1=60°C$, $T_2=69°C$, $T_3=71°C$, $T_4=71°C$.

The hourly production rate was 100 kg/hour.

The final product characteristics are: good dispersibility, particle thickness 0.65 mm, apparent density 720 g/l.

Example 2

The mixture fed to the extruder is as follows (percentages by weight):

| | |
|---|---|
| Dibasic Pb phosphite | 60% |
| Ba-Cd stabiliser | 20% |
| Calcium stearate | 5% |
| RLIO5 Paraffin | 5% |
| Hydroxystearic acid | 5% |
| Stearyl phthalate | 5% |

The extruder is driven at 6 r.p.m. with an absorbed current of 10 A.

The temperatures in the various sections are $T_1=40°C$, $T_2=40°C$, $T_3=40°C$, $T_4=40°C$.

The hourly production rate was 105 kg/hour.

The final product characteristics are: good dispersibility, particle thickness 0.85 mm, apparent density 700 g/l.

Example 3

The mixture fed to the extruder is as follows (percentages by weight):

| | |
|---|---|
| Barium stearate | 63% |
| Cadmium stearate | 25% |
| Bisphenol A | 9% |
| Stearyl phthalate | 3% |

The extruder is driven at 40 r.p.m. with an absorbed current of 25 A.

The temperatures in the various sections are $T_1=70°C$, $T_2=70°C$, $T_3=80°C$, $T_4=80°C$.

The hourly production rate was 95 kg/hour.

The final product characteristics are: good dispersibility, particle thickness 0.65 mm, apparent density 450 g/l.

Example 4

| | |
|---|---|
| Barium stearate | 50% |
| Neutral Pb stearate | 30% |
| Stearin | 12% |
| Bisphenol A | 8% |

The extruder is driven at 40 r.p.m. with an absorbed current of 24 A.

The temperatures in the various sections are $T_1=50°C$, $T_2=53°C$, $T_3=60°C$, $T_4=60°C$.

The hourly production rate was 120 kg/hour.

The final product characteristics are: good dispersibility, particle thickness 0.85 mm, apparent density 500 g/l.

Example 5

| | |
|---|---|
| Cadmium laurate | 48% |
| Barium laurate | 30% |
| Pentaerythritol | 12% |
| Bisphenol A | 7% |
| Stearyl phthalate | 3% |

The extruder is driven at 40 r.p.m. with an absorbed current of 25 A.

The temperatures in the various sections are $T_1=70°C$, $T_2=70°C$, $T_3=80°C$, $T_4=80°C$.

As can be seen, the melting point, which for Cd laurate is about 100°C, is never reached.

The hourly production rate is 110 kg/hour.

The final product characteristics are: good dispersibility, particle thickness 0.6 mm, apparent density 520 g/l.

Example 6

The extruder is fed with the following mixture:

| | |
|---|---|
| Tribasic Pb sulphate | 95% |
| Paraffin of melting point 70°C | 5% |

The extruder is driven at 40 r.p.m. with an absorbed current of 20 A.

The temperatures in the various sections are $T_1=65°C$, $T_2=70°C$, $T_3=70°C$, $T_4=75°C$.

The final product characteristics are: good dispersibility, particle thickness 0.8 mm, apparent density 950 g/l.

Example 7

The extruder is fed with the following mixture:

| | |
|---|---|
| Tribasic Pb sulphate | 90% |
| Stearyl stearate | 10% |

The extruder is driven at 40 r.p.m. with an absorbed current of 18 A.

The temperatures in the various sections are $T_1=50°C$, $T_2=55°C$, $T_3=55°C$, $T_4=58°C$.

The final product characteristics are: good dispersibility, particle thickness 0.6 mm, apparent density 850 g/l.

All the aforesaid obtained products have a dispersibility such that the prefabricated PVC component to which they are added has an "undispersed particle" defects noticeable at a signification of 10 times.

## Claims

1. A process for the production of flakes from a mixture of lubricating, stabilising additives for PVC which contains a product having a melting point between 50° and 90°C, characterised by the following operations:

continuously mixing a pulverulent mixture of additives for PVC containing at least 3% by weight of a product having a melting point between 50° and 90°C chosen from synthetic and natural waxes of the stearyl stearate type, glyceryl monostearate, montan wax, paraffin, high-melting point synthetic paraffin, and stearyl phthalate, while simultaneously subjecting it to increasing pressure and temperature of 50°C to 90°C;

extruding the ductile mix thus obtained into at least one continuous filament of constant size;

cold-rolling said at least one filament to obtain a uniformly compacted continuous strip;

crushing said strip into flakes; and

blowing the flakes in counter-current before being stored, in order to separate therefrom any powder generated by the crushing.

2. A process as claimed in claim 1, characterised in that the heating of the compressed mixture increases gradually from the beginning to the end of the mixing and compression operation, within the temperature range of between 50°C and 90°C.

## Patentansprüche

1. Verfahren zur Herstellung von Schuppen aus einer Mischung von als Gleitmittel wirkenden stabilisierenden Additivgemischen für PVC, welches ein Mittel enthält mit einem Schmelzpunkt zwischen 50 Grad und 90 Grad Celsius gekennzeichnet durch die folgenden Verfahrensschritte:

kontiuierliches Mischen einer pulverisierten Additivmischung für PVC, die mindestens 3% des Gewichtes eines Mittels mit einem Schmelzpunkt zwischen 50 und 90 Grad Celsius enthält und welches aus synthetischen und natürlichen Wachsen des Stearylstearattypus, Glyzerinmonostearat, Montanwachs, Paraffin, synthetischem Paraffin mit hohem Schmelzpunkt und Stearylphtalat ausgewählt ist, während es gleichzeitig ansteigendem Druck und Temperaturen zwischen 50 bfs 90 Grad Celsius unterworfen wird;

Extrudieren der so erhaltenen formbaren Mischung in mindestens ein kontinuierliches Filament von konstanter Größe;

Kaltwalzen des mindestens einen Filamentes, um einen gleichförmigen kompakten kontinuierlichen Streifen zu erhalten;

Zerbrachen des Streifens in Schuppen; und Blasen der Schuppen in Gegenstrom bzw. Gegenfluß vor der Lagerung, um davon jegliches beim Brechen erzeugtes Pulver zu separieren.

2. Verfahren nach Anspruch 1, dadurch gekennzeichnet, daß sich die Erwärmung der komprimierten Mischung graduell vom Beginn bis zum Ende der Mischung und der Komprimierung innerhalb eines Temperaturbereiches von zwischen 50 Grad Celsius und 90 Grad Celsius erhöht.

## Revendications

1. Procédé pour la production de paillettes à partir d'un mélange d'additifs lubrifiants, stabilisants pour PVC qui contient un produit ayant un point de fusion compris entre 50° et 90°C caractérisé en ce qu'il comporte les opérations suivantes:

le mélange de façon continue d'un mélange pulvérulent d'additifs pour le PVC contenant au moints 3% en poids d'un produit ayant un point de fusion compris entre 50°C à 90°C choisi parmi les cires synthétiques et naturelles du type du stéarate de stéarile, monostéarate de glycérile, cire "montan", la paraffine, la paraffine synthétique à point de fusion élevé et le phtalate de stéarile, tout en le soumettant simultanément à une pression croissante et à une température de 50° à 90°C;

extrusion du mélange ductile ainsi obtenu en au moins un filament continu de dimension constante;

laminage à froid dudit filament pour obtenir une bande continue compactée uniformément;

broyage de ladite bande pour la réduire en paillettes et;

soufflage des paillettes à contre courant avant qu'elles ne soient stockées, de façon à séparer de ces dernières toute poussière engendrée par le broyage.

2. Procédé tel que revendiqué dans la revendication 1 caractérisé en ce que le chauffage du mélange croit graduellement du début à la fin de l'opération de mélange et de compression, dans une gamme de températures allant de 50° à 90°C.

FIG. 1

EP 0 137 527 B1